Europäisches Patentamt

(19) European Patent Office

Office européen des brevets

(11) Publication number:

**0 099 196**
**B1**

(12) EUROPEAN PATENT SPECIFICATION

(45) Date of publication of patent specification: **27.08.86**

(21) Application number: **83303586.8**

(22) Date of filing: **22.06.83**

(51) Int. Cl.⁴: **B 60 G 11/10, F 16 F 1/26**

(54) Composite springs.

(30) Priority: **09.07.82 GB 8220052**

(43) Date of publication of application:
**25.01.84 Bulletin 84/04**

(45) Publication of the grant of the patent:
**27.08.86 Bulletin 86/35**

(84) Designated Contracting States:
**AT BE CH DE FR IT LI LU NL SE**

(56) References cited:
**DE-C- 534 959**
**GB-A- 566 377**
**US-A-1 900 841**
**US-A-2 010 177**
**US-A-3 598 387**
**US-A-3 968 958**

**PATENTS ABSTRACTS OF JAPAN, vol. 5, no.**
**151, 24th September 1981, page 823 M 89**

(73) Proprietor: **Rubery Owen Holdings Limited**
**P.O. Box 10 Darlaston**
**Wednesbury West Midlands WS10 8JD (GB)**

(72) Inventor: **Ward, Terence Henry**
**15 Norwich Road Alumwell Estate**
**Walsall West Midlands (GB)**
Inventor: **Bentley, Andrew**
**28 Sundour Crescent**
**Wednesfield Wolverhampton (GB)**
Inventor: **Harding, Keith**
**1 Pear Tree Close**
**Great Barr Birmingham (GB)**

(74) Representative: **Stonehouse, Sidney William**
**et al**
**Barker, Brettell & Duncan 138 Hagley Road**
**Edgbaston**
**Birmingham B16 9PW (GB)**

Courier Press, Leamington Spa, England.

## Description

This invention relates to leaf springs made from composite fibre reinforced synthetic resin materials, and more particularly is concerned with the provision and securing of a bearing member on an end of such a spring.

The composite materials from which such springs are made do not have a particularly good resistance to abrasion and they also have limitations which necessitate special provision being made for mounting such springs, as for example on a vehicle. In a vehicle application an axle may be secured to the spring intermediate its ends. The spring may be provided with eye ends for pivotal attachment to the vehicle, such as disclosed in US—A—3968958. In such a construction the eye ends serve to locate the axle. In an alternative construction the spring is provided with bearing members at its ends which in use of the spring are usually slidably received in hanger brackets on the vehicle, the axle normally being located by a pivotally mounted torque arm connected between the axle and the vehicle. The invention is concerned with this alternative construction and more particularly with the provision of such a bearing member which will serve to resist abrasion and to mount and retain the spring leaf in engagement with a hanger bracket.

The present invention consists in a leaf spring comprising a spring leaf of composite fibre reinforced synthetic resin material having opposed surfaces at an end thereof and a bearing member of abrasion resistant material secured to the said end, characterised in that the bearing member comprises a first generally L-shaped component having a first limb which lies along one of said opposed surfaces and a second limb which is inclined relative to the first limb so as to lie across and extend beyond an end face at the said end of the spring leaf, and a second component which lies along the other of said opposed surfaces and is secured to the second limb of the first component, the extended portion of said second limb of the first component providing an abutment adapted to engage a hanger bracket for the leaf spring to prevent that end of the spring leaf from sliding out of the hanger bracket in use.

The bearing member may be of any suitable material which will protect the spring leaf from damage due to abrasion by a hanger bracket with which the spring leaf has bearing engagement in use. Hanger brackets conventionally are metallic and accordingly the bearing member will normally also be metallic. Where circumstances require it other suitable abrasion resistant material may possibly be used.

The second component may also be generally L-shaped thereby providing a first limb which lies along the other of the opposed surfaces of the spring leaf and a second limb which lies along, and may be secured to, the second limb of the first component.

Preferably the first limb of the first component lies along the surface of the spring leaf which will be under tension when the spring is normally loaded for use, and is longer than the second component, or the first limb of the second component, which lies along the opposite surface of the spring leaf which will be under compression when the spring is normally loaded.

Desirably when the first limb of the first component lies along the surface of the spring leaf which will be under tension when the leaf spring is in use and normally loaded, the free end of said first limb is relieved, as by a chamfer or radius, so that it does not cause abrasion of the surface of the spring leaf when the latter flexes.

The first limb of the first component and the second component may be so spaced relative to the said opposed surfaces of the spring leaf as to permit the insertion of packing pieces between the first limb and the adjacent one of the opposed surfaces and between the second component and the adjacent other surface. Such packing pieces may be of a flexible, creep resistant material, for example nylon, so as to eliminate fretting between the bearing member and the spring leaf.

The spring leaf may be superposed on, and be longer than, a second leaf of composite fibre reinforced synthetic resin material. In such an arrangement the first limb of the first component preferably extends beyond the adjacent end of the second spring leaf.

Embodiments of the invention will now be described by way of example with reference to the accompanying drawings, in which:

Figure 1 is a side elevation showing one end of a three leaf spring according to the invention,

Figure 2 is a plan view of the end of the spring of Figure 1,

Figure 3 is a section on line 3—3 of Figure 1,

Figure 4 is a side elvation showing one end of a two leaf spring with modified securing means for the bearing member, and

Figure 5 is a section on line 5—5 through the leaf spring of Figure 4 showing a modification.

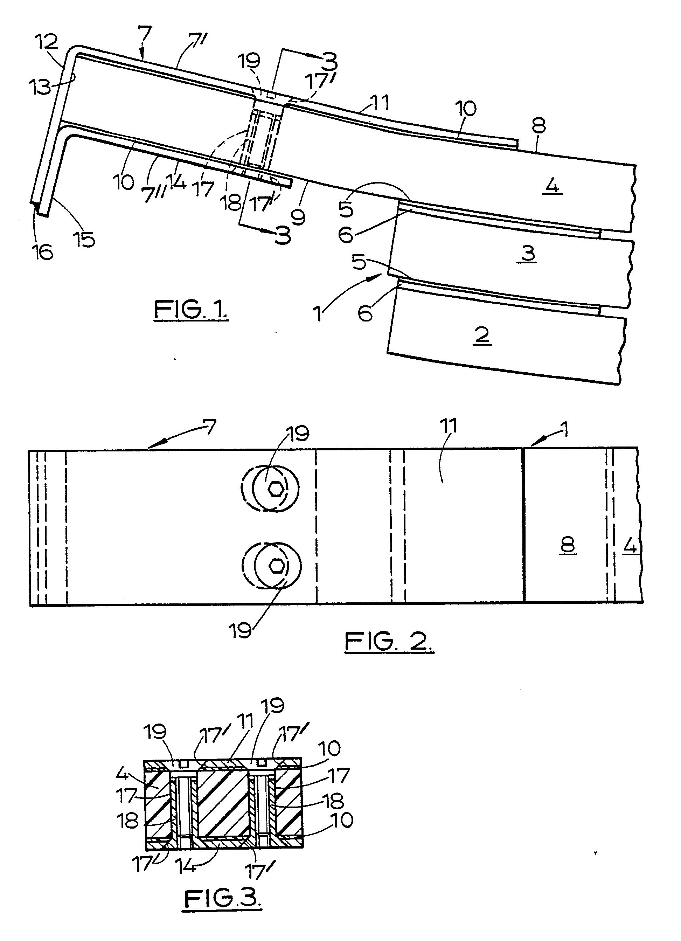

Referring to Figures 1 to 3 of the drawings, a leaf spring 1 comprises three superposed spring leaves 2, 3, 4 of composite fibre reinforced synthetic resin material which are constructed in a known manner and are clamped together (not shown). The spring leaves are separated by rubbing strips 5, for example of medium carbon steel, secured to the lower surface of each of the leaves 3, 4 and wear plates 6, for example of a polyamide, secured to the upper surfaces of the leaves 2, 3 in rubbing contact with the respective rubbing strips 5.

The upper leaf 4 has opposed upper and lower surfaces 8, 9 at its end which are enclosed within a bearing member 7. The bearing member 7 comprises first and second L-shaped components 7' and 7'' respectively. The first component 7' has a side part 11 which lies on the upper surface 8 and an end limb 12 which is substantially normal to the side part 11 and extends across and beyond the end face 13 of the leaf 4. The second component 7'' has a first side part 14 which lies along the lower surface 9 and an end limb 15 which lies along the end limb 12 of the first component 7' and is secured to that end limb 12, as by welding, at 16.

As can be seen in Figure 1, the end of the upper leaf 4 is received between the upper and lower side parts 11, 14 of the bearing member 7. Nylon packing pieces 10 are interposed between the adjacent respective side parts and upper and lower surfaces of the leaf 4. Two laterally spaced holes 17, Figure 3, are drilled through the side parts 11, 14, the packing pieces 10 and the leaf 4 between them. End portions 17' of the holes 17 in the side part 11, 14 are countersunk. An internally screw threaded, countersunk, headed sleeve 18 is inserted into each hole 17 from the underside of the bearing member and leaf and is secured with a countersunk head screw 19 inserted from the top of the bearing member and leaf, as best seen in Figure 3. The screws 19 are preferably locked with a suitable known thread locking adhesive. The bearing member 7 may be bonded, as by an adhesive, onto the end of the leaf 4.

In use of the leaf spring 1 the bearing member 7, secured to the upper leaf 4, is longitudinally slidably received in a hanger bracket secured to a vehicle. The side parts 11, 14 provide abrasion resistant surfaces for the spring within the hanger bracket. The end limbs 12, 15 prevent the spring from sliding out of the hanger bracket.

When the leaf spring is in use the weight of the vehicle is applied to the spring through the upper side part 11 of the bearing member which is of a size to spread the load along the end of the upper leaf 4 and to give support to that leaf. The upper side 11 extends beyond the ends of the lower leaves 2, 3 of the spring, as shown in Figure 1, so as to assist in distributing the load to all three leaves of the spring, and so that it is at no point solely applied to the leaf 4. This will not, of course, be the case with a single leaf spring.

Only one end of the leaf spring 1 has been shown but it will be appreciated that a similar bearing member may be secured to the other end of the upper leaf 4.

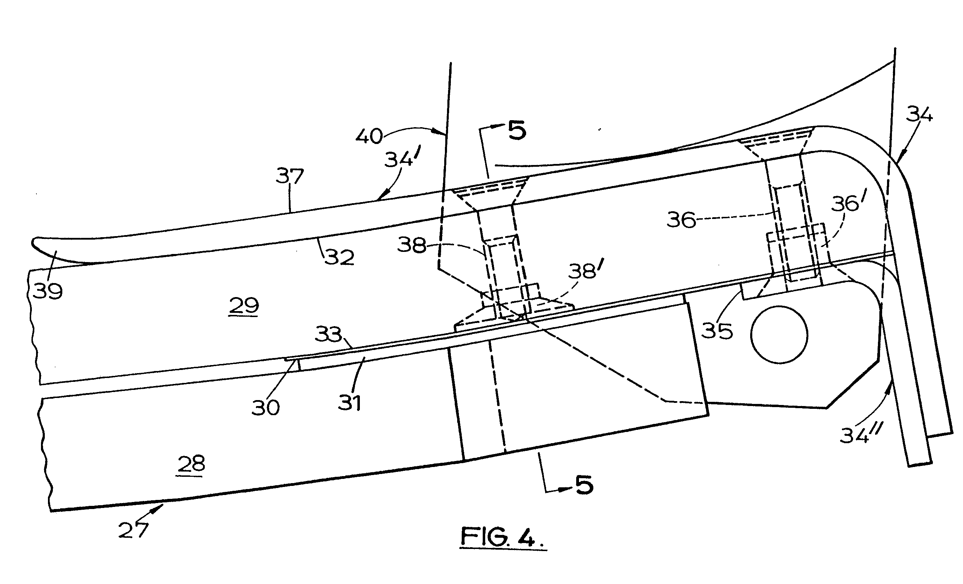

Referring now to Figure 4, a leaf spring 27, of which one end only is shown, comprises two superposed spring leaves 28, 29 of composite fibre reinforced synthetic resin material which are clamped together (not shown). The spring leaves are separated by a rubbing strip 30 secured at the lower surface of the upper leaf 29 and a wear plate 31 secured to the upper surface of the lower leaf 28 in rubbing contact with the rubbing strip 30.

The upper leaf 29 has opposed upper and lower surfaces 32, 33 respectively which are enclosed at the end of the leaf within a bearing member 34. The bearing member 34 is generally similar to bearing member 7 of the first-described embodiment comprising first and second L-shaped components 34' and 34'' respectively. It will be noted, however, that its second component 34'' has a shorter side part 35, and the rubbing strip 30 extends to the end of the upper leaf 29 and is secured between the side part 35 and the lower surface 33 of the upper leaf by aligned shouldered bolts 36 and shouldered nuts 36' which secure the bearing member 34 to the end of the leaf 29. An upper side part 37 of the first L-shaped component 34' of the bearing member 34 is additionally secured to the upper leaf 29 by aligned bolts 38 and shouldered nuts 38'. It will be observed that these nuts 38' are recessed into the lower surface of the upper leaf 29 and their outside diameters are increased to spread the load within the leaf. A rounded end 39 of the upper side part 37 of the first component 34' will also be noted which is provided to avoid abrasion of the upper surface 32 when the leaf 29 flexes.

The end of the leaf spring 29 is shown in a hanger bracket 40.

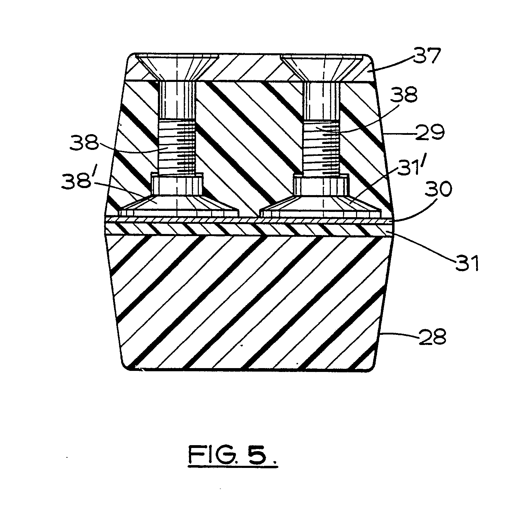

As shown in Figure 5, the sides of the lower spring leaf 28 may be inclined inwardly towards the lower surface of the leaf, and the sides of the upper spring leaf 29 may be inclined inwardly towards the upper surface of that leaf. This is an optional arrangement which provides side clearance in the hanger bracket to allow for twisting of the spring. The taper may be of the order of 7°. This is particularly useful where it is desired to replace a conventional steel spring with a composite spring in accordance with the invention without changing the hanger brackets, and it is desired to retain the maximum width for the composite spring to meet performance requirements.

**Claims**

1. A leaf spring comprising a spring leaf (4, 29) of composite fibre reinforced synthetic resin material having opposed surfaces (8, 9, 32, 33) at an end thereof and a bearing member (7, 34) of abrasion resistant material, secured to the said end, characterised in that the bearing member (7, 34) comprises a first generally L-shaped component (7', 34') having a first limb (11, 37) which lies along one of said opposed surfaces (8, 32) and a second limb (12) which is inclined relative to the first limb (11, 37) so as to lie across and extend beyond an end face at the said end of the spring leaf (4, 29), and a second component (7'', 34'') which lies along the other of said opposed surfaces (9, 33) and is secured to the second limb (12) of the first component (7', 34'), the extended portion of said second limb (12) of the first component (7', 34') providing an abutment adapted to engage a hanger bracket for the leaf spring to prevent that end of the spring leaf (4, 29) from sliding out of the hanger bracket in use.

2. A leaf spring according to claim 1 characterised in that the second component (7'', 34'') of the bearing member (7, 34) is generally L-shaped, having a first limb (14, 35) which lies along the other of said opposed surfaces (9, 33) and a second limb (15) which is inclined relative to the first limb (14, 35) and extends so as to form the abutment jointly with the extended portion of the second limb (12) of the first component (7', 34').

3. A leaf spring according to claim 1 or claim 2 characterised in that the or each second limb (12, 15) extends normal to the or each first limb (11, 37, 14, 35).

4. A leaf spring according to any of claims 1 to 3 characterised in that the first limb (11, 37) of the first component (7', 34') lies along the surface (8, 32) of the spring leaf (4, 29) which will be under tension when the spring is normally loaded for use, and said first limb (11, 37) is longer than the second component (7'', 34''), or the first limb (14, 35) of the second component (7'', 34''), which lies along the opposite surface (9, 33) of the spring leaf (4, 29) which will be under compression when the leaf spring is normally loaded for use.

5. A leaf spring according to any preceding claim characterised in that the spring leaf (4, 29) is superposed on a second spring leaf (3, 28) of composite fibre reinforced synthetic resin material and is longer than the second spring leaf (3, 28), and in that the first limb (11, 37) of the first component (7', 34') extends beyond the adjacent end of the second spring leaf (3, 28).

6. A leaf spring according to claim 5 as dependent from claim 2 characterised in that a rubbing strip (5, 30) is secured to the lower surface (9, 33) of the first spring leaf (4, 29) between the first limb (14, 35) of the second component (7'', 34'') and the first spring leaf (4, 29) and extends beyond the adjacent end of the second spring leaf (3, 28) for co-operation with a wear plate (6, 31) secured to the upper surface of the second spring leaf (3, 28) at said adjacent end.

7. A leaf spring according to claim 5 or claim 6 characterised in that the sides of the first spring leaf (29) at the end to which the bearing member (34) is secured are inclined inwardly towards the upper surface (32) of the first spring leaf (29), and the sides of the second spring leaf (28) at its adjacent end are inclined inwardly towards its lower surface, the arrangement being such as to provide clearance between the sides of the leaves (29, 28) and a hanger bracket with which the leaf spring is engaged in use and enable the leaf spring to twist in the hanger bracket.

8. A leaf spring according to any preceding claim characterised in that a free end (39) of the first limb (37) of the first component (34') which lies along the surface (32) of the spring leaf (29) which will be under tension when the leaf spring is in use and normally loaded, is relieved as by a chamfer or radius so as not to cause abrasion of the spring leaf (29) when flexing in use.

9. A leaf spring according to any preceding claim characterised in that a packing piece (10) of flexible creep resistant material is interposed and retained between at least one of the opposed surfaces (8, 9) of the, or the first, spring leaf (4) and the adjacent first limb (11, 14) of the respective first or second component (7', 7'').

**Patentansprüche**

1. Blattfeder mit einem aus faserverstärktem Kunstharzverbundwerkstoff bestehenden Federblatt (4, 29), das an einem Ende einander abgewandte Oberflächen (8, 9, 32, 33) und ein aus abriebfestem Werkstoff bestehendes Lagerteil (7, 34), welches an diesem Ende befestigt ist, aufweist, dadurch gekennzeichnet, daß das Lagerteil (7, 34) aufweist: ein erstes, etwa L-förmiges Bauteil (7', 34') mit einem ersten Schenkel (11, 37), der längs einer der sich gegenüberliegenden Oberflächen (8, 32) anliegt, und einem zweiten Schenkel (12), der in Bezug auf den ersten Schenkel (11, 37) geneigt ist, so daß er quer liegt und sich über eine Stirnseite des Endes des Federblatts (4, 29) hinauserstreckt, und ein zweites Bauteil (7'', 34''), das entlang der anderen der sich gegenüberliegenden Oberflächen (9, 33) anliegt und an dem zweiten Schenkel (12) des ersten Bauteils (7', 34') befestigt ist, wobei der verlängerte Abschnitt des zweiten Schenkels (12) des ersten Bauteils (7', 34') ein für den Eingriff eines Hängeblocks der Blattfeder ausgebildetes Gegenlager bildet, um zu verhindern, daß das Ende des Federblatts (4, 29) im Einsatz aus dem Aufhängeblock herausgleitet.

2. Blattfeder nach Anspruch 1, dadurch gekennzeichnet, daß das zweite Bauteil (7'', 34'') des Lagerteils (7, 34) etwa L-förmig ist, einen ersten Schenkel (14, 35), der entlang der anderen der sich gegenüberliegenden Oberflächen (9, 33) anliegt, und einen zweiten Schenkel (15) besitzt, der in Bezug auf den ersten Schenkel (14, 35) geneigt ist und sich so erstreckt, daß er gemeinsam it dem verlängerten Abschnitt des zweiten Schenkels (12) des ersten Bauteils (7', 34') das Gegenlager bildet.

3. Blattfeder nach Anspruch 1 oder 2, dadurch gekennzeichnet, daß der oder jeder zweite Schenkel (12, 15) sich senkrecht zu dem oder zu jedem ersten Schenkel (11, 37, 14, 32) erstreckt.

4. Blattfeder nach einem der Ansprüche 1 bis 3, dadurch gekennzeichnet, daß der erste Schenkel (11, 37) des ersten Bauteils (7', 34') entlang derjenigen Oberflächen (8, 32) des Federblatts (4, 29) anliegt, die bei normaler Belastung der Feder unter Zugspannung steht, und daß der erste Schenkel (11, 37) länger als das zweite Bauteil (7'', 34'') oder der erste Schenkel (14, 35) des zweiten Bauteils (7'', 34'') ist, welcher an der gegenüberliegenden Oberfläche (9, 33) des Federblatts (4, 29) anliegt, die bei normaler Belastung der Blattfeder unter Druckspannung steht.

5. Blattfeder nach irgendeinem der vorhergehenden Ansprüche, dadurch gekennzeichnet, daß das Federblatt (4, 29) einem zweiten Federblatt (3, 28) aus faserverstärktem Kunstharz-Verbundwerkstoff überlager und länger als das zweite Federblatt (3, 28) ist, und daß der erste Schenkel (11, 37) des ersten Bauteils (7', 34') sich über das benachbarte Ende des zweiten Federblatts (3, 28) hinaus erstreckt.

6. Blattfeder nach Anspruch 5 in Verbindung mit Anspruch 2, dadurch gekennzeichnet, daß an der Unterseite (9, 33) des ersten Federblatts (4, 29) zwischen dem ersten Schenkel (14, 35) des zweiten Bauteils (7'', 34'') und dem ersten Federblatt (4, 39) eine Reibleiste (5, 30) befestigt ist, die sich über das benachbarte Ende des zweiten Federblatts (3, 28) hinaus erstreckt, um mit einer Verschließplatte (6, 31) zusammenzuwirken, die an der Oberseite des zweiten Federblatts (3, 28) an dem genannten benachbarten Ende befestigt ist.

7. Blattfeder nach Anspruch 5 oder 6, dadurch gekennzeichnet, daß die Seiten des ersten Federblatts (29) an dem Ende, an welchem das Lagerteil (24) befestigt ist, zur Oberseite (32) des ersten Federblatts (29) hin nach innen geneigt sind, und daß die Seiten des zweiten Federblatts (28) an seinem benachbarten Ende zu seiner Unterseite hin nach innen geneigt sind, wobei die Anordnung so geschaffen ist, daß zwischen den Seiten der Blätter (29, 28) und einem Aufhängeblock, mit dem die Blattfeder im Einsatz in Eingriff steht, ein Spielraum geschaffen wird, der es der Blattfeder gestattet, sich in dem Aufhängeblock zu drehen.

8. Blattfeder nach irgendeinem der vorhergehenden Ansprüche, dadurch gekennzeichnet, daß ein freies Ende (39) des ersten Schenkels (37) des ersten Bauteils (34'), der entlang der Oberfläche (32) des Federblatts (29) anliegt, die im Einsatz der Blattfeder und bei deren normaler Belastung unter Zugspannung steht, abgeschrägt oder mit einem Radius versehen ist, um keinen Abrieb des Federblatts (29) zu verursachen, wenn dieses sich im Betrieb durchbiegt.

9. Blattfeder nach irgendeinem der vorhergehenden Ansprüche, dadurch gekennzeichnet, daß zwischen mindestens einer der sich gegenüberliegenden Oberflächen (8, 9) des oder des ersten Federblatts (4) und dem benachbarten Schenkel (11, 14) des jeweiligen ersten oder zweiten Bauteils (7', 7'') ein Beilagestück (10) aus flexiblem, kreichfestem Material angeordnet und gehalten ist.

## Revendications

1. Ressort à lames comprenant une lame (4, 29) de ressort en une matière composite formée d'une résine synthétique à armature de fibres, ayant à une extrémité des surfaces opposées (8, 9, 32, 33) et un élément de support (7, 34) en une matière résistant bien à l'abrasion, fixé à ladite extrémité, ressort caractérisé en ce que l'élément de support (7, 34) comprend un premier composant (7', 34') ayant une forme générale en L et comportant une première branche (11, 37) qui se situe le long de l'une desdites surfaces opposées (8, 32) et une seconde branche (12) qui est inclinée par rapport à la première branche (11, 37) de façon à se situer en travers d'une face extrême de ladite extrémité de la lame (4, 29) de ressort et à se prolonger au-delà de cette face extrême, et un second composant (7'', 34'') qui se situe le long de l'autre desdites surfaces opposées (9, 33) et est fixé à la second branche (12) du premier composant (7', 34'), la partie constituant un prolongement de ladite seconde branche (12) du premier composant (7', 34') constituant un aboutement destiné à venir au contact d'une console de suspension du ressort à lames pour empêcher cette extrémité de la lame (4, 29) de ressort de sortir en service, par glissement, de la console de suspension.

2. Ressort à lames selon la revendication 1, caractérisé en ce que le second composant (7'', 34'') de l'élément de support (7, 34) a une forme générale en L, comportant une première branche (14, 35) qui se situe le long de l'autre desdites surfaces opposées (9, 33) et une seconde branche (15) qui est inclinée par rapport à la première branche (14, 35) et s'étend de manière à former l'aboutement conjointement avec la partie constituant un prolongement de la seconde branche (12) du premier composant (7', 34').

3. Ressort à lames selon la revendication 1 ou la revendication 2, caractérisé en ce que la ou chaque seconde branche (12, 15) s'étend perpendiculairement à la ou à chaque première branche (11, 37, 14, 35).

4. Ressort à lames selon l'une quelconque des revendications 1 à 3, caractérisé en ce que la première branche (11, 37) du premier composant (7', 34') se situe le long de la surface (8, 32) de la lame (4, 29) de ressort qui va se trouver sous tension mécanique quand le ressort est normalement chargé pour servir, et en ce que ladite première branche (11, 37) est plus longue que le second composant (7'', 34'') ou que la première branche (14, 35) du second composant (7'', 34''), qui se situe le long de la surface opposée (9, 33) de la lame (4, 29) de ressort qui va se trouver sous compression quand le ressort à lames est normalement chargé pour servir.

5. Ressort à lames selon l'une quelconque des revendications précédentes, caractérisé en ce que la lame (4, 29) de ressort est superposée sur une seconde lame (3, 28) de ressort en une matière composite formée d'une résine synthétique à armature de fibres et est plus longue que la seconde lame (3, 28) de ressort, et en ce que la première branche (11, 37) du premier composant (7', 34') s'étend audelà de l'extrémité adjacent de la seconde lame (3, 28) de ressort.

6. Ressort à lames selon la revendication 5 quand elle dépend de la revendication 2, caractérisé en ce qu'une bande (5, 30) de frottement est fixée à la surface inférieure (9, 33) de la première lame (4, 29) de ressort entre la première branche (14, 35) du second composant (7'', 34'') et la première lame (4, 29) de ressort et s'étend au-delà de l'extrémité adjacent de la seconde lame (3, 28) de ressort pour coopérer avec une plaque (6, 31) d'usure fixée à la surface supérieure de la seconde lame (3, 28) de ressort à cette extrémité adjacente.

7. Ressort à lames selon la revendication 5 ou la revendication 6, caractérisé en ce que les côtés de la première lame (29) de ressort, à l'extrémité à laquelle l'élément (34) de support est fixé, sont inclinés vers l'intérieur vers la surface supérieure (32) de la première lame (29) de ressort, et les côtés de la seconde lame (28) de ressort, à son extrémité adjacente, sont inclinés vers l'intérieur vers sa surface inférieure, l'agencement étant tel qu'il donne du jeu entre les côtés des lames (28, 29) et une console de suspension avec laquelle le ressort à lames est en contact en service, et de manière à permettre au ressort à lames de subir une torsion dans la console de suspension.

8. Ressort à lames selon l'une quelconque des revendications précédentes, caractérisé en ce qu'à une extrémité libre (39) de la première branche (37) du premier composant (34'), qui se situe le long de la surface (32) de la lame (29) de ressort qui va se trouver sous tension mécanique quand le ressort à lames est en service et normalement chargé, présente une dépouille constituée par exemple par un chanfrein ou un arrondi de manière à ne pas provoquer d'abrasion de la lame (29) de ressort lors d'une flexion en service.

9. Ressort à lames selon l'une quelconque des revendications précédentes, caractérisé en ce qu'un morceau (10) de garnissage, en une matière flexible résistant au glissement, est interposé et retenu entre au moins l'une des surfaces opposées (8, 9) de la, ou de la première, lame (4) de ressort et la première branche (11, 14) adjacente du premier ou second composant (7', 7'') respectif.

FIG. 1.

FIG. 2.

FIG.3.

FIG. 4.

0 099 196

FIG. 5.